# EUROPEAN PATENT SPECIFICATION

(11) **EP 1 777 454 B1**
(45) Date of publication and mention of the grant of the patent: **30.04.2008**
(21) Application number: 06020927.7
(22) Date of filing: 05.10.2006
(51) Int. Cl.: F17C 5/00

(54) **Cascade bank selection based on ambient temperature**
Auswahl kaskatierter Tanks in Abhängigkeit von der Umgebungstemperatur
Selection de réservoirs en cascade de pression basée sur la temperature ambiente

(30) Priority: 10.10.2005 US 247566
(43) Date of publication of application: 25.04.2007
(73) Proprietor: Air Products and Chemicals, Inc., Allentown, PA 18195-1501 (US)
(72) Inventor: Farese, David John, Riegelsville PA 18077 (US); Cohen, Joseph Perry, Bethlehem PA 18017 (US)
(74) Representative: Rögner, Jürgen

(56) References cited:
- EP-A- 1 452 794
- US-A- 4 523 548
- US-A- 5 406 988
- US-A- 5 454 408
- US-A- 5 597 020
- US-A1- 2003 164 202
- US-A1- 2004 118 476

## Description

### BACKGROUND OF THE INVENTION

This invention relates to a system and method for transferring compressed gas from high-pressure storage vessels to a receiving vessel and more particularly to a system and method of controlling the temperature of compressed gas being transferred from one or more high-pressure storage vessels to a receiving vessel.

Cascade filling processes that employ multiple high-pressure storage vessels to charge a lower pressure-receiving vessel are known in the prior art, as exemplified in Borck U.S. Patent No. 6,779,568. The '568 patent discloses that, for a constant filling time, the peak temperature of the gas in the receiving tank will be lower when a lower pressure storage vessel is used first during the cascade filling process. Thus, the '568 patent teaches controlling the order in which the storage vessels are utilized based on the difference in pressure within those storage banks.

The prior art also teaches that the temperature rise in a receiving tank can be limited by adjusting the filling rate from the high-pressure storage vessels, especially at the start of the filling process when the rate of temperature increases the greatest, as exemplified in Hwang, et al. U.S. Patent No. 5,901,748 and Togasawa, et al. U.S. Patent No. 6,598,624.

A further prior art approach for limiting or controlling the temperature rise in a receiving tank is to utilize additional hardware, such as a heat exchanger to cool the flowing gas stream from the high-pressure storage vessels, upstream of the receiving tank. The use of such additional hardware is disclosed in Sugano, et al. U.S. Patent No. 6,360,793 and Cohen, et al. U.S. Patent No. 6,619,336.

U.S. Patent No. 5,454,408 discloses a variable-volume CNG storage and dispensing apparatus with a plurality of storage tanks connected to a dispensing station. When a receiving tank is being filled, or alternatively when a storage tank is being replenished from a gas supply line, a controller responds to the pressure within the storage tank to vary the volume of that tank.

Although the above prior art disclosures focus on the impact that the filling process has on the receiving tank; none of those disclosures takes into account, or even recognizes the need to take into account, the impact of ambient temperature on the compressed gas within and leaving the compressed gas storage system during the process of filling a receiving tank. For example, at low ambient temperatures (e.g., - 17,8°C (0°F)) the impact of isentropic expansion cooling due to the reduction in pressure within the storage system can be significant, as temperature within the gas storage and delivery system can approach the minimum safe operating limit (typically -40°C (-40°F)).

Based on the limitations of the prior art approaches for storing and transferring compressed gas from high-pressure storage vessels to a lower pressure-receiving vessel a need is believed to exist for an improved system for controlling (e.g., increasing or decreasing) the amount of cooling of the compressed gas to be transferred to a receiving vessel based on ambient temperature conditions. It is to such a system and method that the present invention relates.

### BRIEF SUMMARY OF THE INVENTION

In accordance with the system and process of this invention, the operation of a compressed gas storage and delivery system is adjusted based on changes in ambient temperature conditions in order to minimize the impact of isentropic expansion cooling on the storage and delivery system. In particular, this invention has its greatest applicability.in a system where compressed gas is being transferred from a series of high-pressure vessels into one or more low-pressure vessels and there is a desire to cool or warm the gas being transferred. More specifically, the invention has its most preferred applicability in the fueling of compressed gas vehicles, such as hydrogen or natural gas vehicles, where it is desirable to supply the vehicles with gas within a certain range of ambient temperature, such as above -28,9°C (-20°F) and below 15,6°C (60°F).

A system for controlling the temperature of compressed gas being transferred from one or more high-pressure storage vessels to a receiving vessel in accordance with this invention includes a plurality of high-pressure storage vessels with compressed gas therein and a conduit for receiving the compressed gas from one or more of the plurality of high-pressure storage vessels and being adapted to communicate with a receiving vessel for transferring the compressed gas from said one or more of the plurality of high-pressure storage vessels to said receiving vessel. A plurality of flow-control devices is included in the system for controlling the flow of compressed gas from one or more of the storage vessels to the receiving vessel. A temperature-measuring device is employed for measuring the ambient temperature and a controller regulates the flow-control devices based on the measured ambient temperature to thereby control the storage vessel volume communicating with the receiving vessel from the one or more storage vessels, to thereby control the temperature of the compressed gas being transferred to the receiving vessel.

In the preferred embodiment of this invention a controller regulates the flow-control devices based on the measured ambient temperature by comparing the measured ambient temperature with a preset temperature to thereby control the storage vessel volume communicating with the receiving vessel from one or more high-pressure storage vessels.

In accordance with this invention the parameter being controlled directly in response to the ambient temperature is the storage vessel volume that is placed in flow communication with the receiving vessel to be filled; not the mass or pressure of the gas. However, the mass and pressure of gas transferred to the receiving vessel is effected by the storage volume placed in communication with the receiving vessel during the transfer or filling operation.

In accordance with the broadest aspects of this invention, different arrangements of storage vessels can be employed to establish the desired storage volume in flow communication with the receiving vessel at any given time during the filling operation. For example, a plurality of storage vessels having substantially the same volume can be employed to store the compressed gas, and different numbers of storage vessels can be grouped together under the control of an individual flow-control device. Thus, when it is desired to employ the smallest storage volume to fill the receiving vessel, the flow-control device communicating with the smallest number of storage vessels will be operated. When it is desired to communicate a larger storage volume with a receiving vessel, then the flow-control device that communicates a greater number of the high-pressure storage vessels will be opened to increase the storage vessel volume in communication with the receiving vessel to be filled.

Another approach to regulating the storage vessel volume in communication with a receiving vessel during any desired portion of the filling cycle is to actually employ storage vessels of different volumes and then communicate a desired storage vessel with a receiving vessel through actuation of a corresponding flow-control device, depending upon the storage vessel volume that is to be communicated with the receiving vessel.

Yet another approach permitting the communication of either the same or different storage vessel volumes in communication with a receiving vessel at any desired time during the filling cycle is to provide a plurality of high-pressure storage vessels, each having substantially the same volume, and placing each of those storage vessels in communication with a separate flow-control device upstream of a single, common conduit in flow communication with a receiving vessel to be filled. Thus, when a single flow-control device is opened only one of the high-pressure storage vessels will be in communication with the receiving vessel through the common conduit; when two flow-control devices are opened, two of such high-pressure vessels will be in flow communication with the receiving vessel thereby doubling the storage vessel volume in flow communication with the receiving vessel, etc. This latter arrangement provides substantial versatility in the storage and delivery system by permitting the storage vessel volumes in communication with a receiving vessel to be varied over a wide range during the filling of the receiving vessel. In particular, by selectively maintaining only one high-pressure storage vessel in communication with the receiving vessel at any given time during the filling cycle, the same storage vessel volume will always be communicating with the receiving vessel throughout the entire filling cycle. Alternatively, during different phases of the filling cycle two or more flow-control devices can be opened to thereby communicate two or more of the high-pressure storage vessels with the receiving vessel at any given time, thereby providing a greater storage vessel volume in communication with the receiving vessel at any desired time in the filling cycle.

A method for controlling the temperature of compressed gas being transferred from one or more high-pressure storage vessels to a receiving vessel includes the steps of providing a plurality of high-pressure storage vessels including compressed gas therein; connecting the plurality of high-pressure storage vessels to a receiving vessel so that the compressed gas in one or more of the high-pressure storage vessels can be transferred to the receiving vessel; measuring the ambient temperature and controlling the storage vessel volume in flow communication with the receiving vessel in response to the ambient temperature to thereby control the temperature of the compressed gas being transferred to the receiving vessel.

In a preferred method of this invention the step of controlling the storage vessel volume in flow communication with the receiving vessel in response to the ambient temperature is provided by a controller responsive to the difference between the ambient temperature and a preset temperature.

In one preferred method of this invention the step of controlling the volume of gas being transferred to the receiving vessel is carried out by controlling the number of storage vessels in communication with the receiving vessel as gas is being transferred from the storage vessels to said receiving vessels.

In accordance with another aspect of this invention, the step of controlling the volume of gas being transferred to the receiving vessel during a filling cycle includes the step of changing the number of storage vessels in communication with the receiving vessel during the step of transferring gas to the receiving vessel, whereby different gas storage volumes are in flow communication with the receiving vessel during different portions of the gas transferring operation.

In accordance with another aspect of this invention the step of controlling the volume of gas being transferred to the receiving vessel is carried out by communicating only one storage vessel at a time with the receiving vessel during the entire filling operation.

### BRIEF DESCRIPTION OF THE DRAWINGS

The invention will be described by way of example with reference to the accompanying drawings, in which:

Fig. 1 is a schematic view showing a system for controlling the temperature of compressed gas being transferred from one or more high-pressure storage vessels to a receiving vessel in accordance with one embodiment of this invention; and

Fig. 2 is a schematic view of a system for controlling the temperature of compressed gas being transferred from one or more of high-pressure storage vessels to a receiving vessel in accordance with a second embodiment of this invention.

### DETAILED DESCRIPTION OF THE INVENTION

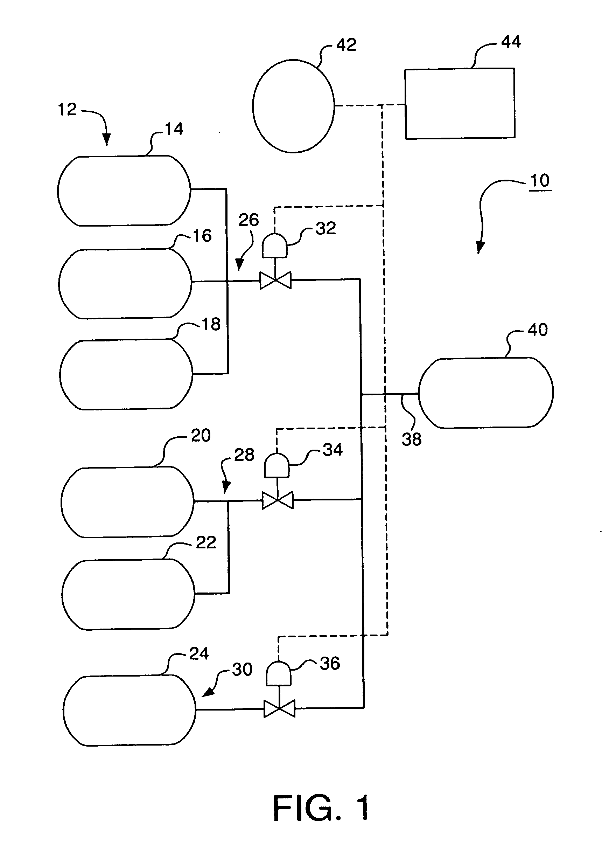

Referring to Fig. 1, a storage and delivery system for compressed gas in accordance with one embodiment of this invention is illustrated at 10. Storage and delivery system 10 includes a storage section 12 including plurality of compressed gas storage vessels 14, 16, 18, 20, 22 and 24. It should be understood that the number of storage vessels in the storage and delivery system can be varied; the exact number not constituting a limitation on the broadest aspects of this invention.

As can be seen in Fig. 1, the six (6) storage vessels are arranged in three (3), unequal size (volume) storage banks 26, 28 and 30. The storage bank 26 includes three (3) storage vessels 14,16 and 18; the second storage bank 28 includes storage vessels 20 and 22 and the third storage bank 30 includes the single storage vessel 24. Thus, each of the storage banks 26, 28 and 30 has a different compressed gas storage volume.

Still referring to Fig. 1, each bank of storage vessels has its flow controlled by a separate flow-control device. Preferably the flow-control devices are on-off supply valves 32, 34 and 36, respectively, each operable either in a fully opened or fully closed position. As can be seen in Fig. 1, the flow-control valve 32 controls the flow of compressed gas from the three storage vessels 14, 16 and 18 in bank 26, as a unit, and directs that flow into a supply line 38 for delivery to a receiving tank 40. In a similar manner, the flow-control valve 34 controls the flow of compressed gas from the storage vessels 20 and 22, which constitute the second bank 28 of storage vessels. When this second valve 34 is opened, it communicates the second bank of storage vessels with the supply line 38 for delivery of compressed gas to the receiving tank 40. Control valve 36 controls the flow of compressed gas from the single storage vessel 24, which constitutes the third bank 30. When the valve 36 is opened it directs the flow of compressed gas through supply line 38 to the receiving tank.

It should be understood that when each of the banks 28, 30 and 32 of storage vessels is placed in flow communication with receiving vessel 40, the pressure in the storage vessels communicating with the receiving vessel drops as gas flows into the receiving vessel until the pressure in the storage vessels communicating with the receiving vessel equalize with the internal pressure of the receiving vessel. At that point in time the gas flow from the bank(s) of storage vessels communicating with the receiving vessel ends.

As can be seen in Fig.1, the group of two storage vessels 20, 22 constituting the second bank 28 has twice the gas storage volume as the single storage vessel 24 constituting the third bank 30, and the three storage vessels 14, 16 and 18 constituting the first bank 28 has three times the storage volume as the single storage vessel 24 constituting the third bank 30. Thus, the gas storage volume that communicates with the receiving vessel 40 through the supply line 38 can be varied by selectively opening one or more of the flow-control valves 32, 34 and 36.

Still referring to Fig. 1, a temperature measuring device 42 is provided and is in communication with programmable logic controller 44. The programmable logic controller 44 operates the flow control valves 32, 34 and/or 36 in a programmed sequence based upon the ambient temperature measured by the temperature measuring device 42. In particular, in the preferred embodiment of this invention the programmable logic controller includes a preset temperature that is compared to the measured, ambient temperature and the relationship between these latter-two temperatures determines the manner in which the programmable logic controller 44 functions to open, or sequence, one or more of the control valves 32, 34 and 36, as described in the following example.

Assuming that the ambient temperature measured by the device 42 is greater than, or higher than the preset temperature in the programmable logic controller (i.e., -12,2°C (10°F)), thereby establishing that the cooling of the gas should be maximized as it is being transferred to the receiving vessel 40, the programmable controller 44 will first open valve 36 to only communicate the storage volume of storage vessel 24 with the receiving vessel 40. The pressure in the storage vessel 24, by virtue of this vessel constituting the smallest storage volume for delivering compressed gas to the receiving vessel 40, drops to the greatest degree possible in equalizing with the pressure in the receiving vessel, thereby delivering the coldest gas possible by taking maximum advantage of the heat of expansion cooling. Next, the programmable logic controller 44 will open the valve 34 to communicate storage vessels 20, 22 of bank 28 with the receiving vessel 40, and thereafter will open control valve 32 for communicating the three storage vessels 14, 16 and 18 of bank 26 with the receiving vessel 40, thereby delivering a lower proportion of the compressed gas to the storage vessel 40 at warmer temperatures.

Alternatively, when the ambient temperature is less than the set point of the programmable logic controller (when it is generally cold), cooling of the gas during the transfer operation is not desirable. Under these conditions, the programmable logic controller 44 is programmed to first open valve 32 to communicate supply vessels 14,16 and 18 of bank 26 with the receiving tank 40. Since the pressure in these latter three cylinders 14, 16 and 18 does not drop as much as the pressure did in storage vessel 24 on a warmer day (when the ambient temperature was greater than the preset temperature of the programmable logic controller) to equalize the pressure with that in the receiving vessel, the cooling of the compressed gas due to heat of expansion is minimized.

It should be understood that the programmable logic controller 44 can be programmed to vary the number of valves that are opened at any given time, as well as the order in which those valves are opened, depending upon the desired amount of cooling of the compressed gas being transferred to the receiving tank 40. In particular, the storage and delivery system 10 is designed to be capable of delivering the coldest gas possible to the receiving vessel 40 when the ambient temperature measured by the device 42 is higher than a preset temperature in the programmable logic controller 44, and the cooling of the compressed gas transferred to the receiving tank 40 is desirably minimized when the ambient temperature measured by the device 42 is less than the preset temperature in the programmable logic controller 44.

In particular, the greater the pressure drop that takes place in the supply vessel to equalize with the pressure in the receiving vessel, the greater the cooling affect that is obtained. The greatest pressure drop is achieved by initially delivering compressed gas to the receiving vessel 40 from the smallest available volume storage vessel (i.e., 24) in the storage section 12 of the system.

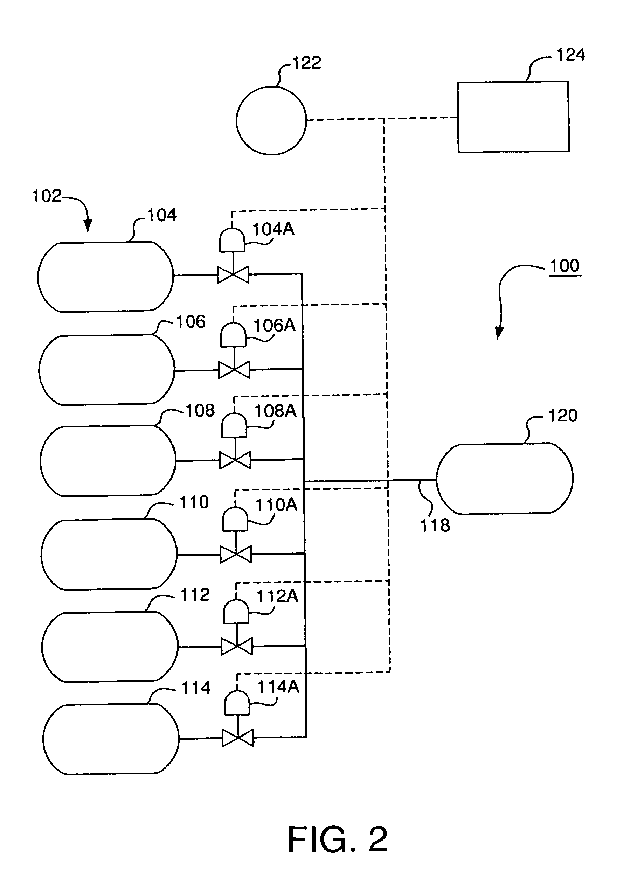

Referring to Fig. 2, a second embodiment of a storage and delivery system in accordance with this invention is illustrated at 100. This storage and delivery system includes a storage section 102 including a plurality of storage vessels or cylinders 104, 106, 108, 110, 112 and 114. Although the storage section 102 is illustrated as including six (6) separate storage vessels, the number of vessels can be varied in accordance with the broadest aspects of this invention.

Still referring to Fig. 2, each of the storage vessels is controlled by a separate flow control device, in the form of an on-off supply valve 104A, 106A, 108A, 110A, 112A and 114A, respectively.

Each of the conduits in which the flow-control valves are included communicates downstream of those flow-control valves with a common feed line 116, and this latter feed line communicates with a supply line 118 for directing the flow of compressed gas from one or more of the storage vessels 104,106,108,110,112 and 114 to a receiving tank or vessel 120.

Still referring to Fig. 2, a temperature measuring device 122 measures the ambient temperature in the same manner as the temperature measuring device 42 employed in the storage and delivery system 10. Also, the storage and delivery system 100 includes a programmable logic controller 124 including a preset temperature therein. This programmable logic controller 124 can be the same as the programmable logic controller 44 of storage and delivery system 10.

In accordance with the operation of the storage and delivery system 100, the ambient temperature measured by the temperature measuring device 122 is compared to the preset temperature in the programmable logic controller, and based upon that comparison, the programmable logic controller operates the various control valves 104A, 106A, 108A, 110A, 112A, and 114A in a programmed manner to aid in controlling the temperature of compressed gas being transferred from one or more of the high-pressure storage vessels, 104, 106, 108, 110, 112 and 114 to the receiving tank or vessel 120.

For example, assuming that the ambient temperature measured by the device 122 is more than or higher than a preset temperature in the programmed logic controller 124 -12,2°C (10°F) for example), indicating that the ambient temperature is warm and that the compressed gas being transferred to the receiving tank or vessel 120 should be cool to its maximum extent, the programmable logic controller is programmed to selectively open each of the valves 104A, 106A, 108A, 110A, 112A and 114A, one valve at a time. In this manner, at any specific time in the gas transferring operation only one of the storage tanks 104, 106, 108, 110, 112 and 114 will be directing the flow of compressed gas into the receiving tank or vessel 120 to allow the pressure, in a single tank at a time, to equalize with the pressure in the receiving tank or vessel 120. In this mode of operation, the order in which the individual flow-control valves are opened is not important, but it is desirable that only one valve at a time be opened. This provides for the greatest degree of pressure drop in the storage vessels until pressure equalization takes place with the receiving vessel 120, thereby delivering the coldest gas possible by taking maximum advantage of heat of expansion cooling.

It should be understood that the programmable logic controller 124 can be programmed to override the above operating sequence (or any other sequence being carried out), as desired.

However, when the ambient temperature is colder than the set temperature, generally indicating that the ambient temperature is cold and that the compressed gas being transferred from the storage section 102 to the receiving tank or vessel 120 does not require significant cooling, the programmable logic controller 124 can be programmed to open more than one control valve at a time. For example, control valves 104A and 106A can be opened first when the temperature is less than -12,2°C (10°F) but more than -17,2°C (1°F). Another valve (for example, control valve 108A) could be opened if the temperature falls to -17,8°C (0°F). Ultimately, all of the valves can be opened at the same time to minimize heat of expansion cooling at the coldest temperature, e.g., -34,4°C (-30°F), for example.

It should be understood that the above disclosed operation of the storage and delivery systems 10 and 100, including the sequence of their operation, can be varied within wide limits. The most important feature in this invention is that the system is designed to control the temperature of compressed gas being transferred from one or more high-pressure storage vessels to a receiving vessel based upon ambient temperature conditions.

A number of modifications can be made within the scope of this invention.

For example, the storage and delivery system 10, rather than employing three separate groups of storage vessels, with each storage vessel having essentially the same volume, can be designed so that each of the groups 26, 28 and 30 is replaced by a single storage vessel, with the storage volume of each vessel differing from the storage volume in every other vessel. For example, the bank 26 vessels 14, 16 and 18 could be replaced by a single storage vessel having a storage volume corresponding to the total storage volume provided by the storage vessels 14, 16 and 18. Likewise, the storage vessels 20 and 22, constituting the second bank 28 of storage vessels can be replaced by a single storage vessel having a storage volume equivalent to the total storage volume of the vessels 20 and 22. In this embodiment the storage vessel 24 will remain, presenting the desired storage vessel volume to be controlled by the supply valve 36.

The storage and delivery systems of this invention can be employed in a wide variety of applications. In one preferred application the systems can be employed in fueling of compressed gas vehicles such as hydrogen or natural gas vehicles, wherein it is desirable to supply the vehicles with gas within a certain temperature, such as above -28,9°C (-20°F) and below 15,6°C (60°F).

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. A system for controlling the temperature of compressed gas being transferred from one or more high pressure storage vessels (14, 16, 18, 20, 22, 24) to a receiving vessel (40), said system including:
A. a plurality of high pressure storage vessels (14, 16, 18, 20, 22, 24) including compressed gas therein;
B. a conduit for receiving compressed gas from one or more of the plurality of high pressure storage vessels (14, 16, 18, 20, 22, 24) and being adapted to communicate with a receiving vessel (40) for transferring compressed gas from said one or more of the plurality of high pressure storage vessels (14, 16, 18, 20, 22, 24) to said receiving vessel (40);
C. a plurality of flow control devices (32, 34, 36) for controlling the flow of compressed gas from one or more of said storage vessels (14, 16, 18, 20, 22, 24) to said receiving vessel (40);
D. a temperature measuring device (42) for measuring the ambient temperature; and
E. a controller (44) or regulating the flow control devices (32, 34, 36) in response to the ambient temperature measured by the measuring device (42) to control the storage vessel volume communicating with the receiving vessel (40) from said one or more storage vessels (14, 16, 18, 20, 22, 24), to thereby control the temperature of the compressed gas being transferred to said receiving vessel (40).

2. The system of claim 1, wherein the controller (40) sequentially controls separate flow control devices (32, 34, 36) to selectively control the storage vessel volume communicating with the receiving vessel (40) as compressed gas is being transferred to said receiving vessel (40).

3. The system of claim 1, wherein at least one of said plurality of flow control devices (32, 34, 36) controls the flow of compressed gas from a storage vessel volume (14, 16, 18, 20, 22, 24) to said receiving vessel (40) that is different from the storage vessel volume from which compressed gas is transferred to said receiving vessel (40) under the control of at least one other of said plurality of flow control devices (32, 34, 36).

4. The system of claim 1, wherein each of said plurality of flow control devices (32, 34, 36) controls the flow of compressed gas to said receiving vessel (40) from a different storage vessel volume.

5. The system of claim 1, wherein the plurality of high pressure storage vessels (14, 16, 18, 20, 22,24) are arranged in two or more groups (26, 28, 30) of storage vessels, each group (26, 28, 30) of storage vessels communicating with said receiving vessel (40) through a separate flow control device (32, 34, 36).

6. The system of claim 5, wherein the storage vessel volume of each group (26, 28, 30) is different from the storage vessel volume of every other group (26, 28, 30).

7. The system of claim 6, wherein the volume of each of the storage vessels (14, 16, 18, 20, 22, 24) is approximately the same, and the number of storage vessels in each group (26, 28, 30) is different from the number of storage vessel in every other group (26, 28, 30).

8. The system of claim 1, wherein each storage vessel (14, 16, 18, 20, 22, 24) communicates with the receiving vessel (40) through a separate flow control device (32, 34, 36).

9. The system of claim 1, wherein the flow control devices (32, 34, 36) are valves.

10. The system of claim 1, wherein said receiving vessel (40) is a tank in a vehicle to be operated by gas transferred from said one or more high pressure storage vessels (14, 16, 18, 20, 22, 24).

11. The system of claim 1, said controller (44) including a preset temperature and said controller (44) regulating the flow control devices (32, 34, 36) in response to the difference between the ambient temperature and the preset temperature.

12. A method for controlling the temperature of compressed gas being transferred from one or more high pressure storage vessels (14, 16, 18, 20, 22, 24) to a receiving vessel (40), said method including the steps of:
A. providing a plurality of high pressure storage vessels (14, 16, 18, 20, 22, 24) including compressed gas therein;
B. connecting the plurality of high pressure storage vessels (14, 16, 18, 20, 22, 24) to a receiving vessel (40) so that the compressed gas in one or more of the high pressure storage (14, 16, 18, 20, 22, 24) vessels can be transferred to the receiving vessel 40;
C. measuring the ambient temperature; and
D. controlling the storage vessel volume in flow communication with the receiving vessel (40) in response to the ambient temperature to thereby control the temperature of the compressed gas being transferred to said receiving vessel (40).

13. The method of claim 12, wherein the step of controlling the storage vessel volume in flow communication with the receiving vessel (40) is provided by a controller (44) responsive to the difference between the ambient temperature and a second, preset temperature.

14. The method of claim 12, wherein the step of controlling the volume of gas being transferred to the receiving vessel (40) is carried out by controlling the number of storage vessels (14, 16, 18, 20, 22, 24) in communication with the receiving vessel (40) as gas is being transferred from said storage vessels (14, 16, 18, 20, 22, 24) to said receiving vessel (40).

15. The method of claim 14, including the step of changing the number of storage vessels (14, 16, 18, 20, 22, 24) in communication with the receiving vessel (40) during the step of transferring gas to said receiving vessel (40), whereby different gas storage volumes are in flow communication with the receiving vessel (40) during different portions of the gas transferring operation.

16. The method of claim 14, including the step of controlling the volume of gas being transferred to the receiving vessel (40) by communicating only one storage vessel (14, 16, 18, 20, 22, 24) at a time with the receiving vessel during (40) the entire filling operation.

## Patentansprüche

1. System zur Steuerung bzw. Regelung der Temperatur eines komprimierten Gases, das von einem oder mehreren Hochdruck-Speicherbehältern (14, 16, 18, 20, 22, 24) zu einem Empfangsbehälter (14) übertragen wird, wobei das System enthält:
A. mehrere Hochdruck-Speicherbehälter (14, 16, 18, 20, 22, 24) mit komprimiertem Gas darin;
B. eine Leitung für den Empfang des komprimierten Gases von einem oder mehreren der Hochdruck-Speicherbehälter (14, 16, 18, 20, 22, 24), die angepasst ist, mit einem Empfangsbehälter (40) in Verbindung zu treten, um komprimiertes Gas von einem oder mehreren der Hochdruck-Speicherbehälter (14, 16, 18, 20, 22, 24) zu dem Empfangsbehälter (40) zu übertragen;
C. mehrere Strömungs-Steuer- bzw. -Regelvorrichtungen (32, 34, 36) zur Kontrolle/Steuerung/Regelung der Strömung des komprimierten Gases von einem oder mehreren der Speicherbehälter (14, 16, 18, 20, 22, 24) zu dem Empfangsbehälter (40);
D. eine Temperaturmessvorrichtung (42) zur Ermittlung der Umgebungstemperatur; und
E. eine Steuer- bzw. Regeleinrichtung (44) zum Regulieren der Strömungs-Steuervorrichtungen (32, 34, 36) in Abhängigkeit von der Umgebungstemperatur, die von der Messvorrichtung (42) ermittelt wird, um das Speicherbehältervolumen von dem einen oder mehreren Speicherbehältern (14, 16, 18, 20, 22, 24), das mit dem Empfangsbehälter (40) in Verbindung steht, zu steuern bzw. regeln, um **dadurch** die Temperatur des komprimierten Gases zu steuern bzw. regeln, das zu dem Empfangsbehälter (40) übertragen wird.

2. System nach Anspruch 1, wobei die Steuer- bzw. Regeleinrichtung (44) getrennte Strömungs-Steuer- bzw. -Regelvorrichtungen (32, 34, 36) sequentiell steuert, um selektiv das Speicherbehältervolumen zu steuern, das mit dem Empfangsbehälter (40) in Verbindung steht, wenn komprimiertes Gas zu dem Empfangsbehälter (40) übertragen wird.

3. System nach Anspruch 1, wobei wenigstens eine der Strömungs-Steuer- bzw. Regelvorrichtungen (32, 34, 36) die Strömung des komprimierten Gases von einem Speicherbehältervolumen (14, 16, 18, 20, 22, 24) zu dem Empfangsbehälter (40) steuert, das unterschiedlich ist zu dem Speicherbehältervolumen, von dem komprimiertes Gas unter der Steuerung/Regelung wenigstens einer anderen der Strömungs-Steuer- bzw. -Regelvorrichtungen (32, 34, 36) zu dem Empfangsbehälter (40) übertragen wird.

4. System nach Anspruch 1, wobei jede der Strömungs-Steuer- bzw. Regelvorrichtungen (32, 34, 36) die Strömung des komprimierten Gases zu dem Empfangsbehälter (40) von einem anderen Speicherbehältervolumen steuert bzw. regelt.

5. System nach Anspruch 1, wobei die Hochdruck-Speicherbehälter (14, 16, 18, 20, 22, 24) in zwei oder mehr Gruppen (26, 28, 30) von Speicherbehältern angeordnet sind, wobei jede Gruppe (26, 28,30) von Speicherbehältern mit dem Empfangsbehälter (40) durch eine getrennte Strömungs-Steuer- bzw. Regelvorrichtung (32, 34, 36) in Verbindung steht.

6. System nach Anspruch 5, wobei das Steuerbehältervolumen jeder Gruppe (26, 28, 30) anders ist als das Steuerbehältervolumen jeder anderen Gruppe (26, 28, 30).

7. System nach Anspruch 6, wobei das Volumen jedes der Speicherbehälter (14, 16, 28, 30, 22, 24) näherungsweise das gleiche ist, und wobei die Zahl der Speicherbehälter in jeder Gruppe (26, 28, 30) unterschiedlich ist zu der Zahl der Speicherbehälter in jeder anderen Gruppe (26, 28, 30).

8. System nach Anspruch 1, wobei jeder Speicherbehälter (14, 16, 18, 20, 22, 24) mit dem Empfangsbehälter (40) durch eine getrennte bzw. separate Strömungs-Steuer- bzw. -Regelvorrichtung (32, 34, 36) in Verbindung steht.

9. System nach Anspruch 1, wobei die Strömungs-Steuer- bzw. -Regelvorrichtungen (32, 34, 36) Absperrorgane wie Ventil, Schieber, Klappe, Hahn sind.

10. System nach Anspruch 1, wobei der Empfangsbehälter (40) ein Tank in einem Fahrzeug ist, das mit dem Gas betrieben werden soll, das von einem oder mehreren Hochdruck-Speicherbehältern (14, 16, 18, 20, 22, 24) übertragen wird.

11. System nach Anspruch 1, wobei die Steuer- bzw. Regeleinrichtung (44) eine vorher eingestellte Temperatur enthält und die Strömungs-Steuer- bzw. Regelvorrichtungen (32, 34, 36) in Abhängigkeit von der Differenz zwischen der Umgebungstemperatur und der vorher eingestellten Temperatur reguliert.

12. Verfahren zur Steuerung bzw. Regelung der Temperatur von komprimiertem Gas, das von einem oder mehreren Hochdruck-Speicherbehältern (14, 16, 18, 20, 22, 24) zu einem Empfangsbehälter (40) übertragen wird, wobei das Verfahren die Schritte enthält:
A. Zurverfügungstellen mehrerer Hochdruck-Speicherbehälter (14, 16, 18, 20, 22, 24) mit komprimiertem Gas darin;
B. Verbinden der Hochdruck-Speicherbehälter (14, 16, 18, 20, 22, 24) mit einem Empfangsbehälter (40), so dass das komprimierte Gas in einem oder mehreren der Hochdruck-Speicherbehälter (14, 16, 18, 20, 22, 24) zu dem Empfangsbehälter (40) überführt werden kann;
C. Messen der Umgebungstemperatur; und
D. Kontrollieren des Speicherbehälter-Volumens, das sich in Strömungsverbindung mit dem Empfangsbehälter (40) befindet, in Abhängigkeit von der Umgebungstemperatur, um **dadurch** die Temperatur des komprimierten Gases, das zu dem Empfangsbehälter (40) überführt wird, zu steuern bzw. zu regeln.

13. Verfahren nach Anspruch 12, wobei der Schritt der Steuerung des Speicherbehälter-Volumens, das sich in Strömungsverbindung mit dem Empfangsbehälter (40) befindet, durch eine Steuer- bzw. Regeleinrichtung (44) in Abhängigkeit von der Differenz zwischen der Umgebungstemperatur und einer zweiten, vorgegebenen Temperatur zur Verfügung gestellt wird.

14. Verfahren nach Anspruch 12, wobei der Schritt des Steuerns des Volumens des Gases, das zu dem Empfangsbehälter (40) überführt wird, durch Steuern der Zahl der Speicherbehälter (14, 16, 18, 20, 22, 24), die sich in Verbindung mit dem Empfangsbehälter (40) befinden, ausgeführt wird, wenn Gas von den Speicherbehältern (14, 16, 18, 20, 22, 24), zu dem Empfangsbehälter (40) überführt wird.

15. Verfahren nach Anspruch 14 mit dem Schritt, die Zahl der Speicherbehälter (14, 16, 18, 20, 22, 24), die sich in Verbindung mit dem Empfangsbehälter (40) befinden, während der Übertragung des Gases zu dem Empfangsbehälter (40) zu ändern, wodurch unterschiedliche Gasspeichervolumina während der unterschiedlichen Bereiche des Gasübertragungsvorgangs in Strömungsverbindung mit dem Empfangsbehälter (40) sind.

16. Verfahren nach Anspruch 14 mit dem Schritt, das Volumen des Gases zu steuern, das zu dem Empfangsbehälter (40) übertragen wird, indem nur ein Speicherbehälter (14, 16, 18, 20, 22, 24) zu einem Zeitpunkt mit dem Empfangsbehälter während des gesamten Füllvorgangs verbunden wird.

## Revendications

1. Système pour réguler la température de gaz comprimé transféré d'une ou plusieurs cuves de stockage à pression élevée (14, 16, 18, 20, 22, 24) vers une cuve de réception (40), ledit système comprenant :
A. une pluralité de cuves de stockage à pression élevée (14, 16, 18, 20, 22, 24) comprenant du gaz comprimé à l'intérieur ;
B. une conduite pour recevoir le gaz comprimé provenant d'une ou plusieurs de la pluralité de cuves de stockage à pression élevée (14, 16, 18, 20, 22, 24) et étant adaptée pour communiquer avec une cuve de réception (40) pour transférer du gaz comprimé de ladite une ou plusieurs de la pluralité de cuves de stockage à pression élevée (14, 16, 18, 20, 22, 24) vers ladite cuve de réception (40) ;
C. une pluralité de dispositifs de régulation d'écoulement (32, 34, 36) pour réguler l'écoulement du gaz comprimé d'une ou plusieurs desdites cuves de stockage (14, 16, 18, 20, 22, 24) vers ladite cuve de réception (40) ;
D. un dispositif de mesure de température (42) pour mesurer la température ambiante ; et
E. un dispositif de commande (44) pour réguler les dispositifs de régulation d'écoulement (32, 34, 36) en réponse à la température ambiante mesurée par le dispositif de mesure (42) pour réguler le volume de cuve de stockage communiquant avec la cuve de réception (40) provenant desdites une ou plusieurs cuves de stockage (14, 16, 18, 20, 22, 24), pour réguler ainsi la température du gaz comprimé transféré vers ladite cuve de réception (40).

2. Système selon la revendication 1, dans lequel le dispositif de commande (40) régule séquentiellement des dispositifs de régulation d'écoulement séparés (32, 34, 36) pour réguler sélectivement le volume de cuve de stockage communiquant avec la cuve de réception (40) à mesure que le gaz comprimé est transféré vers ladite cuve de réception (40).

3. Système selon la revendication 1, dans lequel au moins l'un de ladite pluralité de dispositifs de régulation d'écoulement (32, 34, 36) régule l'écoulement de gaz comprimé d'un volume de cuve de stockage (14, 16, 18, 20, 22, 24) vers ladite cuve de réception (40) qui est différent du volume de cuve de stockage à partir duquel est transféré le gaz comprimé vers ladite cuve de réception (40) sous la commande d'au moins un autre de ladite pluralité de dispositifs de régulation d'écoulement (32, 34, 36).

4. Système selon la revendication 1, dans lequel chacun de ladite pluralité de dispositifs de régulation d'écoulement (32, 34, 36) régule l'écoulement de gaz comprimé dans ladite cuve de réception (40) provenant d'un volume de cuve de stockage différent.

5. Système selon la revendication 1, dans lequel la pluralité de cuves de stockage à pression élevée (14, 16, 18, 20, 22, 24) est agencée en deux groupes ou plus (26, 28, 30) de cuves de stockage, chaque groupe (26, 28, 30) de cuves de stockage communiquant avec ladite cuve de réception (40) par l'intermédiaire d'un dispositif de régulation d'écoulement séparé (32, 34, 36).

6. Système selon la revendication 5, dans lequel le volume de cuve de stockage de chaque groupe (26, 28, 30) est différent du volume de cuve de stockage de chaque autre groupe (26, 28, 30).

7. Système selon la revendication 5, dans lequel le volume de chacune des cuves de stockage (14, 16, 18, 20, 22, 24) est approximativement le même et le nombre de cuves de stockage dans chaque groupe (26, 28, 30) est différent du nombre de cuves de stockage dans chaque autre groupe (26, 28, 30).

8. Système selon la revendication 1, dans lequel chaque cuve de stockage (14, 16, 18, 20, 22, 24) communique avec la cuve de réception (40) par l'intermédiaire d'un dispositif de régulation d'écoulement séparé (32, 34, 36).

9. Système selon la revendication 1, dans lequel les dispositifs de régulation d'écoulement (32, 34, 36) sont des valves.

10. Système selon la revendication 1, dans lequel ladite cuve de réception (40) est un réservoir dans un véhicule qui sera actionné par le gaz transféré desdites une ou plusieurs cuves de stockage à pression élevée (14, 16, 18, 20, 22, 24).

11. Système selon la revendication 1, ledit dispositif de commande (44) comprenant une température préréglée et ledit dispositif de commande (44) régulant le dispositif de régulation d'écoulement (32, 34, 36) en réponse à la différence entre la température ambiante et la température préréglée.

12. Procédé de régulation de la température de gaz comprimé transféré d'une ou plusieurs cuves de stockage à pression élevée (14, 16, 18, 20, 22, 24) vers une cuve de réception (40), ledit procédé comprenant les étapes consistant à :
A. prévoir une pluralité de cuves de stockage à pression élevée (14, 16, 18, 20, 22, 24) comprenant du gaz comprimé à l'intérieur ;
B. relier la pluralité de cuves de stockage à pression élevée (14, 16, 18, 20, 22, 24) à une cuve de réception (40) de sorte que le gaz comprimé dans une ou plusieurs des cuves de stockage à pression élevée (14, 16, 18, 20, 22, 24) puisse être transféré vers la cuve de réception (40) ;
C. mesurer la température ambiante ; et
D. réguler le volume de cuve de stockage en communication d'écoulement avec la cuve de réception (40) en réponse à la température ambiante pour réguler ainsi la température du gaz comprimé transféré vers ladite cuve de réception (40).

13. Procédé selon la revendication 12, dans lequel l'étape consistant à réguler le volume d'une cuve de stockage en communication d'écoulement avec la cuve de réception (40) est fournie par un dispositif de commande (44) sensible à la différence entre la température ambiante et une seconde température préréglée.

14. Procédé selon la revendication 12, dans lequel l'étape consistant à réguler le volume de gaz transféré vers la cuve de réception (40) est réalisée en régulant le nombre de cuves de stockage (14, 16, 18, 20, 22, 24) en communication avec la cuve de réception (40) à mesure que le gaz est transféré desdites cuves de stockage (14, 16, 18, 20, 22, 24) vers ladite cuve de réception (40)

15. Procédé selon la revendication 14, comprenant l'étape consistant à changer le nombre de cuves de stockage (14, 16, 18, 20, 22, 24) en communication avec la cuve de réception (40) pendant l'étape consistant à transférer le gaz vers ladite cuve de réception (40), moyennant quoi des volumes de stockage de gaz différents sont en communication d'écoulement avec la cuve de réception (40) pendant différentes parties de l'opération de transfert de gaz.

16. Procédé selon la revendication 14, comprenant l'étape consistant à réguler le volume de gaz transféré vers la cuve de réception (40) en communiquant uniquement une cuve de stockage (14, 16, 18, 20, 22, 24) à la fois avec la cuve de réception (40) pendant toute l'opération de remplissage.
